# EUROPÄISCHE PATENTSCHRIFT

(11) **EP 4 082 343 B1**
(45) Veröffentlichungstag und Bekanntmachung des Hinweises auf die Patenterteilung: **03.09.2025**
(21) Anmeldenummer: 22168153.9
(22) Anmeldetag: 13.04.2022
(51) Int. Cl.: A21B 1/48, A21B 1/24

(54) **TUNNELOFEN**
TUNNEL FURNACE
FOUR TUNNEL

(30) Priorität: 27.04.2021 DE 102021204166
(43) Veröffentlichungstag der Anmeldung: 02.11.2022
(73) Patentinhaber: Heuft Thermo-Oel GmbH & Co. KG, 56745 Bell (DE)
(72) Erfinder: FÜLBIER, Christoph, 56745 Bell (DE)
(74) Vertreter: Bardehle Pagenberg Partnerschaft mbB Patentanwälte Rechtsanwälte

(56) Entgegenhaltungen:
- WO-A1-2014/053745
- DE-A1- 102015 219 267
- US-A- 4 960 100

## Beschreibung

### 1. Technisches Gebiet

Die vorliegende Erfindung betrifft einen Tunnelofen für die industrielle Produktion von Backwaren. Insbesondere betrifft die vorliegende Erfindung einen Tunnelofen beim dem die Backwaren auf einem Förderband den Tunnelofen in einer bestimmten Förderrichtung durchlaufen. Derartige Tunnelöfen werden insbesondere zum Backen von Backwaren in Kästen der Kastenverbänden, wie Toastbrot verwendet.

### 2. Stand der Technik

In Tunnelöfen werden Backwaren gebacken, in dem sie durch den Tunnelofen von einer Seite zur anderen durchlaufen. Entsprechend spricht man auch von Durchlaufbacköfen. Derartige Tunnelöfen sind in der Regel für eine sehr große Backleistung geeignet und entsprechend dimensioniert. Sie weisen oft Herdbreiten von 2 bis 4 m und Herdlängen von 10 bis zu 60 m auf. Entsprechend werden solche Tunnelöfen auch als Tunnel-Großbackofen oder Industrie-Tunnelofen bezeichnet. Nachteilig an Tunnelöfen ist der hohe Raumbedarf, insbesondere die große Länge in Durchlaufrichtung. Weiterhin ist der Kapitaleinsatz für einen Durchlaufofen vergleichsweise hoch.

Tunnelöfen können für einen chargenweisen, also schrittweisen, oder kontinuierlichen Betrieb ausgelegt sein. Aufgrund der hohen Kapazitäten ist die Beladung des Förderbandes des Tunnelofens oftmals automatisiert.

Entscheidend für das Backergebnis ist der Wärmeeintrag auf das Backgut. Hierzu sind im Stand der Technik unterschiedliche Lösungen bekannt.

Aus der Druckschrift DE 10 2018 208 959 A1 ist ein Durchlauf-Backofen für den kontinuierlichen Backbetrieb bekannt, der mindestens zwei übereinanderliegenden Backräumen aufweist. Der Durchlauf-Backofen weist je einen Thermoöl-Rohrwärmtauscher im Backraum für die Ober- und Unterhitze auf. Mit einer Umlufteinrichtung lässt sich eine Backraumerwärmung über eine Strahlungsabgabe vom Thermoöl-Wärmetauscher mit den Vorteilen einer konvektiven Wärmeübertragung kombinieren.

Aus der Druckschrift DE 10 2016 223 041 A1 ist ein Durchlaufbackofen bekannt, der ein erstes luftdurchlässiges Heizelement unterhalb eines Förderbandes und ein zweites luftdurchlässiges Heizelement oberhalb des Förderbandes aufweist. Die Heizelemente können als thermoölbeheizte Heizplatten mit Durchgangsöffnungen ausgestaltet sein. Weiterhin sind Luftleitvorrichtungen mit einstellbaren Luftdurchlassöffnungen vorgesehen, um die beiden Heizelemente gezielt anzuströmen.

Aus der Druckschrift EP 2 870 876 B1 ist ein Durchlaufbackofen bekannt, bei dem unterhalb eines Förderbandes ein Heizregister angeordnet ist, das aus einer flächigen Anordnung einer von Thermoöl durchflossenen Leitung besteht. Das Heizregister wird von unten mit Luft durchströmt, die dann von unten auf das Förderband und auf die Backwaren trifft. Zur Anströmung des Heizregisters ist weiterhin eine Luftleiteinrichtung in einem Registerunterraum vorhanden, um die Leitungen des Registers direkt anzublasen.

Aus der Druckschrift EP 3 358 975 B1 bzw. der Druckschrift DE 10 2015 219 267 A1 ist ein Durchlaufbackofen mit kombinierter Wärmeübertragung und mindestens drei bzw. zwei Backzonen bekannt, bei dem jede der Backzonen mindestens ein Mittel zur Konvektionsbeheizung der Unterseite und der Oberseite des Backguts aufweist und zusätzlich eine Wärmetauscherplatte zur Strahlungsbeheizung der Oberseite und/oder Unterseite des Backguts.

Aus der Druckschrift US 4 960 100 A ist ein Gastronomie-Tunnelofen bekannt, bei dem unterhalb eines Förderbandes schlitzförmige Düsen für die Zufuhr von Heißluft angeordnet sind. Zwischen den Düsen wird Abluft abgeführt und mittels eines Brenners wieder erhitzt, um als Oberhitze- und Unterhitze-Zuluftströmung dem Backraum wieder zugeführt zu werden.

Weiterer Stand der Technik ist der WO2014053745A zu entnehmen.

Obwohl der Stand der Technik vielfältige Möglichkeiten zur Beheizung eines Tunnelofens zeigt, besteht ein Bedarf darin, insbesondere für Backprodukte in Kästen oder Formen, wie etwa Toastbrot, die Effizienz des Tunnelofens und das Backergebnis weiter zu verbessern.

### 3. Zusammenfassung der Erfindung

Die oben genannte Aufgabe wird gelöst durch einen Durchlaufbackofen gemäß Anspruch 1.

Insbesondere wird die Aufgabe gelöst durch einen Tunnelofen für die industrielle Produktion von Backwaren; aufweisend einen Backraum mit einem luftdurchlässigen endlos umlaufenden Förderband, welches zum Fördern von Backwaren oder Backgut in einer Förderrichtung durch den Backraum eingerichtet ist; eine Vielzahl von Unterhitze-Luftaustrittsdüsen, die unterhalb des Förderbandes angeordnet und zur Unterseite des Förderbandes gerichtet sind, wobei die Unterhitze-Luftaustrittsdüsen eine direkt zur Unterseite des Förderbandes gerichtete Unterhitze-Zuluftströmung erzeugen; eine Vielzahl von Unterhitze-Lufteinlässe, die flächig unterhalb des Förderbandes verteilt sind, um Unterhitze-Abluft unterhalb des Förderbandes abzuführen; wobei die Unterhitze-Abluft mittels eines Gebläses abgesaugt und durch Thermoöl beheizt als die Unterhitze-Zuluftströmung zugeführt wird, so dass ein Unterhitze-Konvektionskreislauf erzeugt wird.

Durch eine Vielzahl von Unterhitze-Luftaustrittsdüsen wird eine direkt zur Unterseite des Förderbandes gerichtete Unterhitze-Zuluftströmung erzeugt, die einen optimalen Wärmeeintrag auf das Backgut, insbesondere auf Backgut in Kästen, Formen und Kastenverbänden, erzeugt. Durch die direkte Unterhitze-Zuluftströmung kann hierbei der Wärmeintrag genau geregelt werden und es ist ein sehr gleichmäßiger und hoher Wärmeeintrag in das Backgut möglich. Die direkte Unterhitze-Zuluftströmung kann dabei eine Strömungsgeschwindigkeit von bis zu 20 m/s im Düsenspalt erreichen. Durch die gerichtete Unterhitze-Zuluftströmung werden auch die Seitenwände von Kästen, Formen und Kastenverbänden konvektiv erwärmt, so dass das Backgut gleichmäßig erwärmt wird.

Durch die gleichzeitige Zufuhr der gerichteten Unterhitze-Zuluftströmung und der flächigen Absaugung der Unterhitze-Abluft jeweils von unterhalb des Förderbandes, also unterhalb des Backguts, ergibt sich eine Vertikalturbulenz der Konvektionsströmung, die den Wärmeübergang der Konvektionsströmung auf das Backgut im Vergleich zu einer laminaren Strömung stark erhöht. Durch die flächige Abfuhr der Unterhitze-Abluft mittels der Vielzahl von Unterhitze-Lufteinlässe wird eine konstant hohe Vertikalturbulenz über die gesamte Herdfläche erzielt, so dass der konvektive Wärmeeintrag der Unterhitze trotz der sehr großen Herdbreite und -länge gleichmäßig ist. Daneben kann durch die gleichzeitige Zu- und Abfuhr der Konvektionsluft unterhalb des Förderbandes und den Unterhitze-Konvektionskreislauf die Unterhitze des Tunnelofens unabhängig von einer ggf. vorhandenen Oberhitze-Konvektion geregelt werden, was bei dem sehr hohen Wärmeintrag durch die Unterhitze-Konvektion besonders vorteilhaft ist. Hierbei beeinflussen sich die Unterhitze und die Oberhitze kaum. Insbesondere kann der Tunnelofen damit so betrieben werden, dass das Backgut auf seiner Oberseite nur wenig Konvektionsströmung erfährt und dadurch eine zu starke Austrocknung an der Oberseite verhindert wird. Daneben kann der Wärmeeintrag über eine optionale Oberhitze-Konvektion im Wesentlichen unbeeinflusst vom Wärmeeintrag der Unterhitze geregelt werden.

Weiterhin kann durch die gleichzeitige Zufuhr der gerichteten Unterhitze-Zuluftströmung und der flächigen Absaugung der Unterhitze-Abluft jeweils von unterhalb des Förderbandes, auch Blechware im industriellen Maßstab gebacken werden. Bei Backwaren auf Blechen trennt das luftundurchlässige Blech im Wesentlichen den Luftraum unterhalb des Bleches vom Luftraum oberhalb des Bleches. Insbesondere durch die Vielzahl von flächig verteilten Unterhitze-Lufteinlässen können dennoch bei Blechware ebenfalls hohe Luftmengen verwendet werden, um hohe aber gleichmäßige Wärmeinträge auf das Backgut zu erzielen. Ein Durchströmen des gesamten Backraums von unten nach oben oder von oben nach unten ist nicht notwendig.

Durch die Beheizung der Unterhitze-Zuluftströmung mittels Thermoöl wird eine gleichbleibend hohe Temperatur der Unterhitze-Zuluftströmung erreicht, auch wenn ein sehr hoher Wärmebedarf besteht. Hierbei kann durch das Thermoöl als Wärmeträgermedium der Ort der Wärmeerzeugung vom Tunnelofen getrennt werden und etwa als separate Thermoöl-Heizzentrale bereitgestellt werden. Dies reduziert den Raumbedarf des Tunnelofens selbst und optimiert die Wärmeerzeugung.

Bevorzugt sind die Unterhitze-Luftaustrittsdüsen zumindest abschnittsweise linienförmig ausgebildet und/oder erstrecken sich im Wesentlichen über die gesamte Breite des Förderbandes. Damit wird eine gleichmäßige Anströmung und Erwärmung des Backguts über die gesamte Breite des Förderbands erreicht.

Bevorzugt sind die Unterhitze-Luftaustrittsdüsen und die Unterhitze-Lufteinlässe im Wesentlichen auf der selben Ebene unterhalb des Förderbandes angeordnet. Damit wird die möglichst gleichmäßige Absaugung der Unterhitze-Abluft über die gesamte Fläche des Backraums weiter gefördert, so dass der Wärmeeintrag auf das Backgut möglichst gleichmäßig ist, auch bei großen Backraumbreiten und -längen.

Der Tunnelofen weist weiterhin mindestens einen außerhalb des Backraums angeordneten Thermoöl-Luft-Wärmetauscher auf, der eingerichtet ist, die über die Unterhitze-Lufteinlässe abgesaugte Unterhitze-Abluft aufzuheizen und den Unterhitze-Luftaustrittsdüsen als Unterhitze-Zuluft zuzuführen. Über den außerhalb des Backraums angeordneten Thermoöl-Luft-Wärmetauscher kann die Unterhitze-Zuluft genau erwärmt werden, ohne zusätzlich einen unbestimmten Wärmeeintrag in den Backraum einzubringen, wie es bei Wärmetauscherrohren im Backraum der Fall ist.

Bevorzugt weist der Tunnelofen weiterhin eine Vielzahl von kanalartig ausgebildeten Unterhitze-Luftaustrittskanälen, die unterhalb des Förderbandes und quer zur Förderrichtung angeordnet sind, zur Zufuhr von Zuluft zu den Unterhitze-Luftaustrittsdüsen auf; und/oder eine Vielzahl von kanalartig ausgebildeten Unterhitze-Luftabsaugkanälen, die unterhalb des Förderbandes und quer zur Förderrichtung angeordnet sind, zur Abfuhr von Abluft von den Unterhitze-Lufteinlässen.

Bevorzugt sind die Unterhitze-Luftaustrittskanäle und die Unterhitze-Luftabsaugkanäle in Förderrichtung alternierend angeordnet. Damit wird eine gleichmäßige Erwärmung des Backguts durch Unterhitze-Konvektion gewährleistet.

Bevorzugt weisen die Unterhitze-Luftaustrittskanäle einen trapezförmigen Querschnitt auf, der sich von unten nach oben verengt; und/oder die Unterhitze-Luftabsaugkanäle weisen einen trapezförmigen Querschnitt auf, der sich von unten nach oben weitet; und/oder zwei benachbarte Unterhitze-Luftaustritts- und Unterhitze-Luftabsaugkanäle weisen jeweils eine gemeinsame, geneigt angeordnete Zwischenwand aufweisen. Diese Querschnitte optimieren die gerichtete Zufuhr und flächige Absaugung der Unterhitze-Konvektionsströmung.

Der Backraum wird unterhalb des Backguts mittels Konvektion beheizt. Der Wärmeeintrag durch Konvektion ist sehr effektiv, so dass auf einen zusätzlichen Wärmeintrag über Strahlung verzichtet werden kann.

Bevorzugt weist der Tunnelofen weiterhin eine Vielzahl von Oberhitze-Luftaustrittsdüsen auf, die oberhalb des Förderbandes im oberen Bereich des Backraums angeordnet sind, und zur Oberseite des Förderbandes gerichtet sind, wobei die Oberhitze-Luftaustrittsdüsen eine direkt zur Oberseite des Förderbandes gerichtete Oberhitze-Zuluftströmung erzeugen; und eine Vielzahl von Oberhitze-Lufteinlässe, die flächig oberhalb des Förderbandes verteilt sind, um Oberhitze-Abluft flächig oberhalb des Förderbandes abzuführen; wobei die Oberhitze-Abluft mechanisch abgesaugt und als die Oberhitze-Zuluftströmung zugeführt wird, so dass ein Oberhitze-Konvektionskreislauf erzeugt wird. Optional kann der Tunnelofen auch für die Oberhitze eine Konvektionsbeheizung aufweisen. Dies ist insbesondere dann vorteilhaft, wenn Backwaren in geschlossenen Backformen oder geschlossenen Kastenverbänden gebacken werden, wie beispielsweise Toastbrot. Dann kann durch einen Oberhitze-Konvektionskreislauf der Wärmeeintrag auf das Backgut weiter gesteigert werden. Der Wärmeeintrag durch die Oberhitze-Konvektion ist durch die Zu- und Abfuhr der Oberhitze-Konvektionsluft oberhalb des Förderbandes und damit oberhalb der Backwaren im Wesentlichen unabhängig vom Wärmeeintrag durch die Unterhitze. Simulationen haben ergeben, dass sich durch die Art der Luftführung und die separaten Konvektionskreisläufe die Luftströmungen der Unterhitze kaum mit den Luftströmungen der Oberhitze vermischen und sich damit auch die Wärmeeinträge der Konvektion auf die Unterseite bzw. Oberseite der Backwaren kaum beeinflussen. Damit sind die Ober- und Unterhitze-Konvektion im Wesentlichen unabhängig voneinander regelbar.

Bevorzugt weist der Tunnelofen weiterhin eine Vielzahl von Oberhitze-Thermoöl-Heizrohren auf, die im oberen Bereich des Backraums angeordnet sind. Zusätzlich oder alternativ zu einer Oberhitze-Konvektion kann auch eine Beheizung des Backguts mittels Wärmestrahlung erfolgen, die durch Oberhitze-Thermoöl-Heizrohre im oberen Bereich des Backraums angeordnet sind. Der Wärmeeintrag auf das Backgut durch Wärmestrahlung mittels Thermoöl-Heizrohre ist zwar nicht so effektiv, wie der Wärmeeintrag durch Konvektion, jedoch ist bei der Wärmestrahlung die Austrocknung des Backguts geringer, so dass die fertigen Backwaren mehr Feuchtigkeit besitzen. Hierdurch kann besonders vorteilhaft Blechware mit hohem Wärmeeintrag und gleichzeitig geringer Austrocknung gebacken werden. Durch das Blech kann die Backware von unten her nicht austrocknen, oben ist sie jedoch ungeschützt, so dass es von Vorteil ist, in der Oberhitze mit höherem Strahlungsanteil zu backen. Beim Backen von Blechware trennt das Blech weiterhin vorteilhaft die starke Konvektion der Unterhitze vom Bereich der Oberhitze, in dem dann nur eine geringe Konvektion auftritt.

Bevorzugt werden die Oberhitze-Thermoöl-Heizrohre von unten nach oben mit Oberhitze Abluft durchströmt. Hierbei heizt sich die durchströmende Oberhitze-Abluft auf und steht als Oberhitze Zuluft zur Verfügung, die über die Oberhitze-Luftaustrittsdüsen direkt von oben auf das Backgut aufgeblasen wird.

Bevorzugt sind die Unterhitze- und/oder die Thermoöl-Heizrohre als Rippenrohre oder Glattrohre ausgebildet. Die Rippen der Rippenrohre vergrößern deren Oberfläche und sorgen für einen besseren Wärmeübergang auf durchströmende Konvektionsluft. Glattrohre hingegen haben eine bessere Wärmeabgabe durch Strahlung als Rippenrohre.

Bevorzugt sind die Oberhitze-Luftaustrittsdüsen zumindest abschnittsweise linienförmig ausgebildet und/oder erstrecken sich im Wesentlichen über die gesamte Breite des Förderbandes erstrecken. Damit wird die Oberhitze-Konvektion linienförmig auf das Backgut aufgeblasen, so dass dieses sich möglichst effektiv und gleichzeitig gleichmäßig erwärmt.

Bevorzugt, weist Tunnelofen weiterhin einen Thermoölheizkessel auf, eingerichtet zur Beheizung von Thermoöl für den mindestens einen Thermoöl-Luft-Wärmetauscher und/oder eingerichtet zur Beheizung der Vielzahl von Oberhitze-Thermoöl-Heizrohren.

Bevorzugt beträgt die Breite des Förderbandes maximal 4 m, bevorzugt 2 - 4 m, besonders bevorzugt 3 - 4 m und insbesondere 2 m, 2,5 m, 3 m, 3,5 m, 4 m.

Bevorzugt beträgt die Länge des Tunnelofens maximal 50 m, bevorzugt 10 bis 30 m besonders bevorzugt 10 bis 20 m.

### 4. Kurze Beschreibung der Figuren

Im Folgenden werden bevorzugte Ausführungsformen der vorliegenden Erfindung anhand der beigefügten Figuren dargestellt. Dabei zeigt:
- Fig. 1: eine schematische Querschnittsansicht einer ersten Ausführungsform eines Tunnelofens mit Beheizung durch Unterhitze-Konvektion;
- Fig. 2: eine schematische horizontale Teil-Schnittansicht von oben der Ausführungsform der Fig. 1;
- Fig. 3: eine schematische Querschnittsansicht eines Details der Ausführungsform der Fig. 1;
- Fig. 4: eine schematische dreidimensionale Schnittansicht von Unterhitze-Luftaustrittskanälen und Unterhitze-Luftabsaugkanälen der Ausführungsform der Fig. 1
- Fig. 5: eine schematische Querschnittsansicht eines Unterhitze-Luftaustrittskanals der Ausführungsform der Fig. 1;
- Fig. 6: eine schematische Querschnittsansicht einer zweiten Ausführungsform eines Tunnelofens mit Beheizung durch Unterhitze-Konvektion, Oberhitze-Konvektion und Oberhitze-Strahlung;
- Fig. 7: eine schematische Querschnittsansicht einer nicht erfindungsgemäßen Ausführungsform eines Tunnelofens mit Beheizung durch Unterhitze-Konvektion, Unterhitze-Strahlung, Oberhitze-Konvektion und Oberhitze-Strahlung;
- Fig. 8: ein Diagramm der Wärmestromdichten an einem Backgut in Kastenform in Abhängigkeit der Düsenausströmgeschwindigkeit der Unterhitze-Konvektion; und
- Fig. 9: ein Diagramm der Wärmestromdichten an einem Backgut in Kastenform in Abhängigkeit der Düsenausströmgeschwindigkeit der Oberhitze-Konvektion.

### 5. Detaillierte Beschreibung bevorzugter Ausführungsformen

Im Folgenden werden bevorzugte Ausführungsformen der vorliegenden Erfindung mit Bezug auf die beigefügten Figuren im Detail beschrieben.

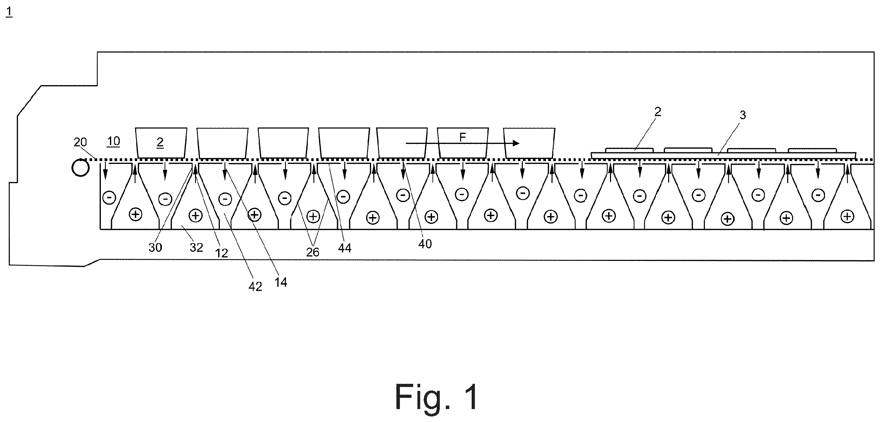

Die Fig. 1 bis 5 zeigen eine erste Ausführungsform eines Tunnelofens 1, bei dem die Beheizung des Backraums 10 im Wesentlichen durch Unterhitze-Konvektion erfolgt. Der Tunnelofen 1 weist ein luftdurchlässiges Förderband 20 auf, auf dem das zu backende Backgut 2 in Förderrichtung F durch den Backraum 10 gefördert wird. Bevorzugt beträgt die Länge des Tunnelofens 1 maximal 50 m, bevorzugt 10 bis 30 m besonders bevorzugt 10 bis 20 m.

Das Förderband 20 ist endlos umlaufend und weist ein Obertrum auf, das sich in Förderrichtung F bewegt und ein Untertrum auf, das sich entgegen der Förderrichtung F bewegt, und das zu Vereinfachungszwecken nicht dargestellt ist. Wenn in der Folge von dem Förderband 20 die Rede ist, wird auf das Obertrum Bezug genommen, auf dem das Backgut 2 abgelegt ist.

Das Backgut 2 kann frei auf dem Förderband 20 liegen oder, was bevorzugt ist, in Formen, Kästen oder Kastenverbänden angeordnet sein. Die Kästen oder Kastenverbände können mit einem Deckel geschlossen sein, wie es beispielsweise zum Backen von Toastbrot der Fall ist.

Wie in Fig. 1 dargestellt, kann das Backgut 2 auch als sog. Blechware auf Backblechen 3 gebacken werden.

Bevorzugt beträgt die Breite des Förderbandes 20 maximal 4 m, bevorzugt 2 - 4 m, besonders bevorzugt 3 - 4 m und insbesondere 2 m, 2,5 m, 3 m, 3,5 m, 4 m.

Unterhalb des Förderbandes 20 sind eine Vielzahl von Unterhitze-Luftaustrittskanäle 32 angeordnet, die bevorzugt einen trapezförmigen Querschnitt aufweisen, der sich von unten nach oben verengt. Alternierend dazwischen sind eine Vielzahl von Unterhitze-Luftabsaugkanäle 42 angeordnet, die bevorzugt einen trapezförmigen Querschnitt aufweisen, der sich von unten nach oben weitet. Bevorzugt weisen zwei benachbarte Unterhitze-Luftaustritts- und Unterhitze-Luftabsaugkanäle 32, 42 jeweils eine gemeinsame, geneigt angeordnete Zwischenwand 26 auf. Damit können die Unterhitze-Luftaustritts- und Unterhitze-Luftabsaugkanäle 32, 42 materialsparend insbesondere aus Blech hergestellt werden.

Die Unterhitze-Luftaustrittskanäle 32 bilden an der Oberseite jeweils Unterhitze-Luftaustrittsdüsen 30, 80, die unterhalb des Förderbandes 20 angeordnet und zur Unterseite des Förderbandes 20 gerichtet sind. Damit können die Unterhitze-Luftaustrittsdüsen 30, 80 eine direkt zur Unterseite des Förderbandes 20 gerichtete Unterhitze-Zuluftströmung 12 erzeugen.

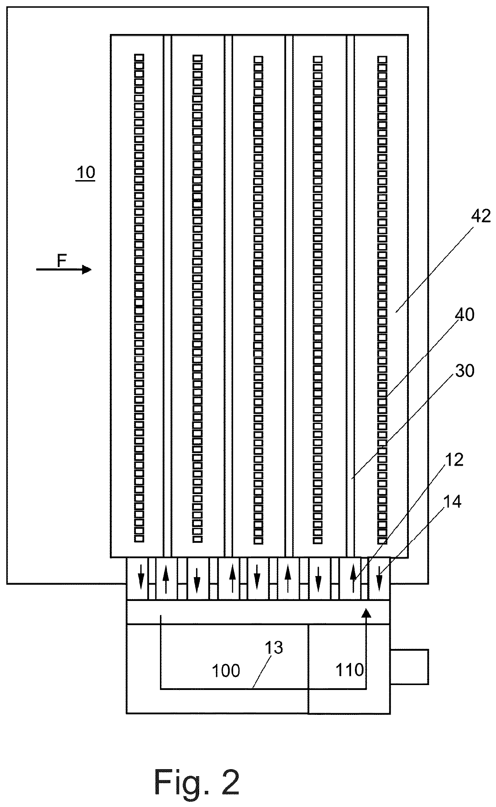

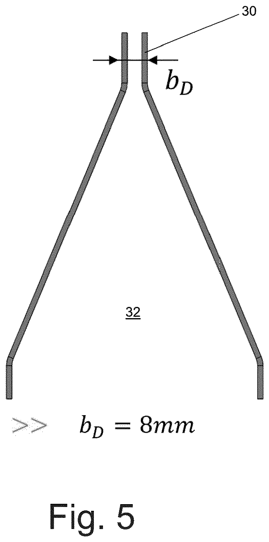

Wie in Fig. 2 ersichtlich, sind die Unterhitze-Luftaustrittsdüsen 30 linienförmig ausgebildet und erstrecken sich im Wesentlichen über die gesamte Breite des Förderbandes 20 erstrecken. Damit wird das Backgut von unten linienförmig mit einer starken, gerichteten Luftströmung 12 angeblasen. Die Geschwindigkeit der Luftströmung 12 im Düsenspalt der Unterhitze-Luftaustrittsdüsen 30 kann bis zu 20 m/s betragen. Wie in Fig. 5 ersichtlich, beträgt die Breite b_{D} des Düsenspalts bevorzugt 5 mm bis 15 mm, besonders bevorzugt 8 mm.

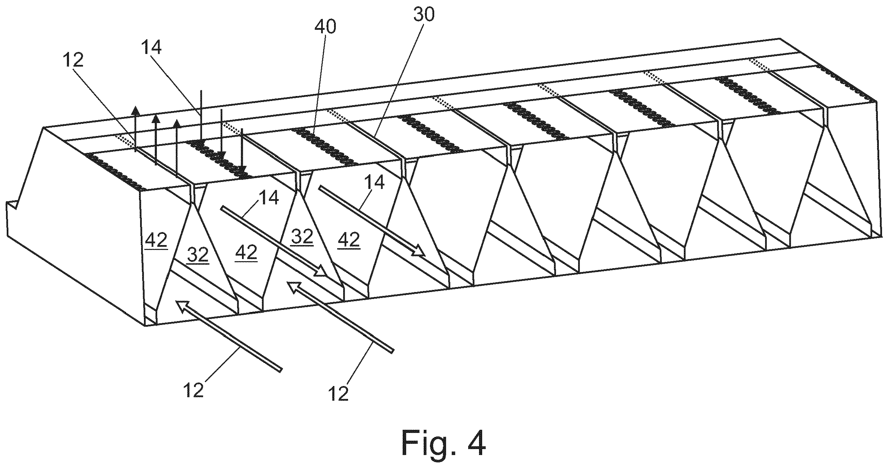

Die Unterhitze-Luftabsaugkanäle 42 weisen an ihrer Oberseite jeweils Unterhitze-Lufteinlässe 40 auf, die flächig unterhalb des Förderbandes 20 verteilt sind, um Unterhitze-Abluft 14 unterhalb des Förderbandes 20 abzuführen. Wie in Fig. 2 und Fig. 4 ersichtlich können die Unterhitze-Lufteinlässe 40 aus einer Reihe von einzelnen Öffnungen bestehen. Andere Ausgestaltungen der Unterhitze-Lufteinlässe 40 sind jedoch ebenfalls möglich.

Wie in Fig. 2 dargestellt, wird die Unterhitze-Abluft 14 mechanisch mittels eines Gebläses 110 aus dem Backraum 10 abgesaugt und als Unterhitze-Zuluftströmung 12 dem Backraum 10 wieder zugeführt, so dass ein Unterhitze-Konvektionskreislauf 13 entsteht. Der Überdruck in den Unterhitze-Luftaustrittskanälen 32 wird durch ein "+"-Zeichen symbolisiert, der Unterdruck in den Unterhitze-Lufteinlasskanälen 42 durch ein "-"-Zeichen.

Im Unterhitze-Konvektionskreislauf 13 befindet sich ein Thermoöl-Luft-Wärmetauscher 100, der die Unterhitze- Abluft 14 auf die gewünschte Einblastemperatur aufheizt. Der Thermoöl-Luft-Wärmetauscher 100 wird mittels Thermoöl beheizt, das durch einen Heizkessel (nicht dargestellt) erhitzt wird.

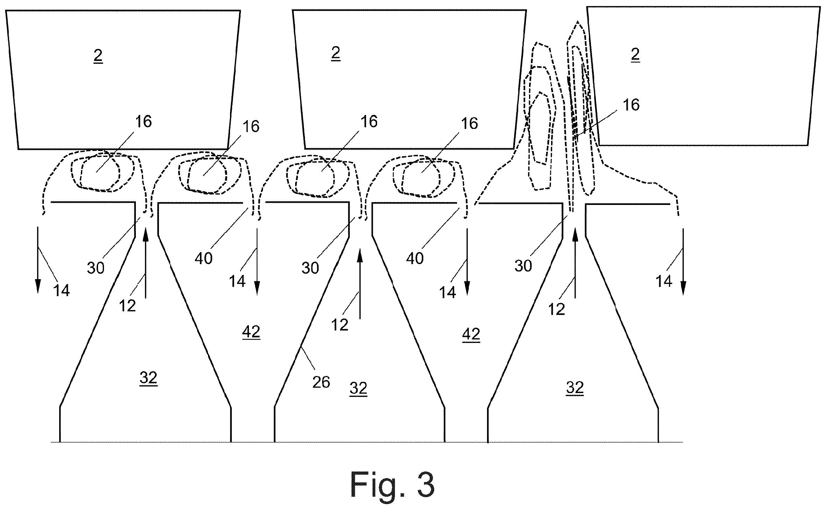

Durch das Einblasen der Unterhitze-Zuluftströmung 12 von unten auf das Backgut 12 und das flächige Absaugen der Unterhitze-Abluft 14 ebenfalls von unterhalb des Backguts 12 entsteht eine Unterhitze-Vertikalturbulenz 16, wie sie stark vereinfacht in Fig. 3 dargestellt ist. Wie im rechten Bereich der Fig. 3 dargestellt, kann sich die Unterhitze-Vertikalturbulenz 16 auch in den Bereich zwischen Teilen des Backguts 2, also zwischen die Formen, Kästen oder Teile von Kastenverbänden hinein erstrecken und deren Seitenwände erwärmen. Ein vollständiges Durchströmen des Backraums 10 auch in den Bereich der Oberhitze hinein, ist jedoch weder erforderlich, noch erwünscht. Die Unterhitze-Vertikalturbulenz 16 bewirkt dabei einen starken Wärmeübergang zwischen der Konvektionsluft 12, 16 und dem Backgut 12. Dieser turbulente Wärmeübergang ist wesentlich höher als bei einer rein laminaren Strömung der Konvektionsluft 12, 16 entlang des Backguts 12. Entsprechend kann entweder der Tunnelofen 1 kürzer ausgeführt werden als vergleichbare Tunnelöfen, oder der Durchsatz durch den Tunnelofen 1 kann gesteigert werden.

Dadurch, dass die Unterhitze-Vertikalturbulenz 16 im Wesentlichen nur die Unterhitze beeinflusst, kann die Oberhitze des Tunnelofens nach Bedarf ausgestaltet werden.

In der ersten Ausführungsform der Fig. 1 ist keine Oberhitze vorgesehen und der Backraum wird im Wesentlichen ausschließlich durch die Unterhitze-Vertikalturbulenz 16 erwärmt. Dies hat den Vorteil eines hohen Wärmeeintrags durch Unterhitze-Konvektion auf die Backformen, Kästen oder Backbleche 3, ohne, dass das Backgut übermäßig austrocknet.

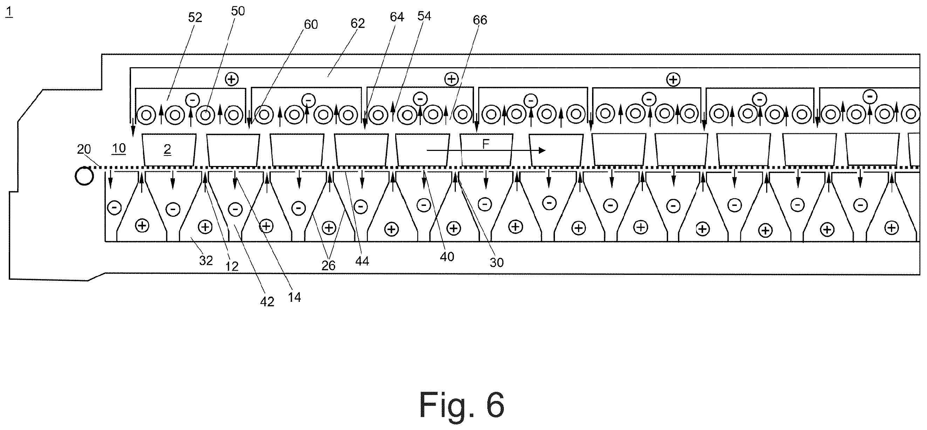

Fig. 6 zeigt eine zweite Ausführungsform des Tunnelofens 1, die bezüglich der Unterhitze der ersten Ausführungsform von Fig. 1 entspricht und die zusätzlich eine Beheizung des Backraums 1 mit Oberhitze aufweist.

Hierzu sind oberhalb des Backguts 2, also im oberem Bereich des Backraums 10, eine Vielzahl von Oberhitze-Luftaustrittsdüsen 60 angeordnet, die zur Oberseite des Förderbandes 20 gerichtet sind. Diese Oberhitze-Luftaustrittsdüsen 60 erzeugen eine direkt zur Oberseite des Förderbandes 20 gerichtete Oberhitze-Zuluftströmung 64.

Weiterhin weist die zweite Ausführungsform des Tunnelofens 1 eine Vielzahl von Oberhitze-Lufteinlässen 66 auf, die flächig oberhalb des Förderbandes 20 verteilt sind, um Oberhitze-Abluft 54 flächig oberhalb des Förderbandes 20 abzuführen. Diese die Oberhitze-Abluft 54 wird beispielsweise mittels eines Gebläses (nicht dargestellt) mechanisch abgesaugt und als die Oberhitze-Zuluftströmung 64 zugeführt wird.

Hierbei entsteht ein Oberhitze-Konvektionskreislauf bei dem die Oberhitze-Luft im Wesentlichen im Kreis geführt wird und eine Oberhitze-Vertikalturbulenz entsteht, die im Wesentlichen die Oberseiten des Backguts 2 per Konvektion erhitzt. Die entsprechenden Druckunterschiede der Oberhitze-Konvektion werden ebenfalls durch "+" und "-"-Zeichen symbolisiert.

Die Oberhitze weist weiterhin optional eine Vielzahl von Oberhitze-Thermoöl-Heizrohren 50, die ebenfalls im oberen Bereich des Backraums 10 angeordnet sind. Diese Oberhitze-Thermoöl-Heizrohre 50 geben einerseits von oben eine Wärmestrahlung auf das Backgut 2 ab und andererseits erwärmen sie die Oberhitze-Abluft 54, die die Oberhitze-Thermoöl-Heizrohre 50 von unten nach oben durchströmt. Hierbei bildet der Raum zwischen den Oberhitze-Thermoöl-Heizrohren 50 die Oberhitze-Lufteinlässe 66. Oberhalb der Oberhitze-Thermoöl-Heizrohre 50 befinden sich Oberhitze-Luftabsaugkanäle 52, die in das Gebläse der Oberhitze münden. Von dem Gebläse wird die Oberhitze-Zuluft über Oberhitze-Zuluftverteiler 62 an die Oberhitze-Luftaustrittsdüsen 60 geleitet.

Die Oberhitze-Thermoöl-Heizrohre 50 sind bevorzugt als Glattrohre ausgebildet, um den Wärmeintrag über Strahlung zu verbessern. Dies ist insbesondere vorteilhaft wenn in der Oberhitze überwiegend mit Strahlungswärme und weniger mit Konfektion gebacken werden soll, etwa um eine übermäßige Austrocknung des Backguts zu verhindern.

Falls hingegen eine Erwärmung der Oberhitze Konvektionsluft im Vordergrund steht, können die Oberhitze-Thermoöl-Heizrohre 50 auch als Rippenrohre ausgebildet sein, um deren Oberfläche zu vergrößern. Damit wird der Wärmeübergang auf die durchströmende Oberhitze-Abluft 54 erhöht und auch Wärmestrahlung auf die Backwaren 2 abgegeben.

Alternativ zu den Oberhitze-Thermoöl-Heizrohren 50 kann die Oberhitze auch rein als Konvektion ausgeführt sein, wobei die Oberhitze-Abluft 54 entweder überhaupt nicht zusätzlich erwärmt wird oder wobei die Oberhitze-Abluft 54 ähnlich zur Unterhitze durch einen Thermoöl-Luft-Wärmetauscher, erwärmt wird, der sich außerhalb des Backraums befindet.

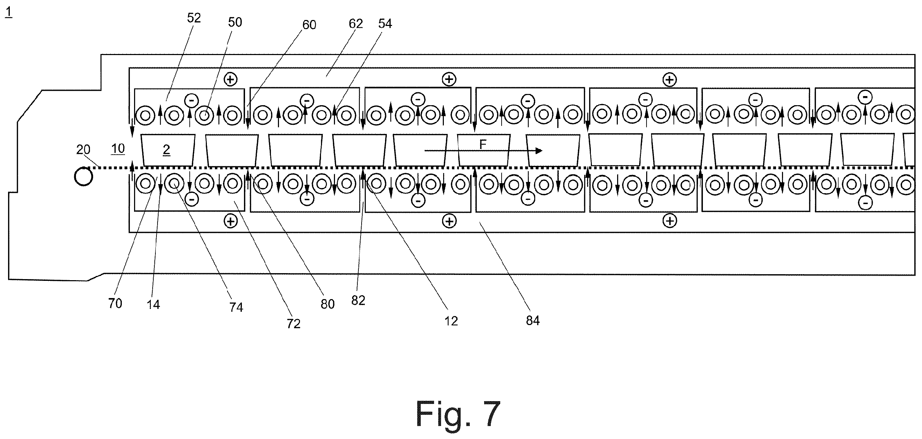

Fig. 7 zeigt eine nicht erfindungsgemäßen Ausführungsform des Tunnelofens 1, die bezüglich der Oberhitze der zweiten Ausführungsform von Fig. 6 entspricht und die eine Unterhitze aufweist die strukturell der Oberhitze der zweiten Ausführungsform von Fig. 6, lediglich mit umgekehrten Strömungsrichtungen, entspricht. In der dritten Ausführungsform werden die Backwaren 2 zusätzlich zur Oberhitze mittels einer Unterhitze-Konvektion und einer Unterhitze-Strahlung erwärmt.

In dieser Ausführungsform des Tunnelofens 1 sind eine Vielzahl von Unterhitze-Thermoöl-Heizrohren 74 unterhalb des Förderbandes 20 angeordnet. Diese werden von oben nach unten mit Unterhitze-Abluft 76 durchströmt. Die Unterhitze-Thermoöl-Heizrohre 74 bilden daher zwischen sich Unterhitze-Lufteinlässe 70 aus. Die Unterhitze-Thermoöl-Heizrohre 74 sind bevorzugt als Glattrohre ausgebildet, um die abgegebene Wärmestrahlung zu optimieren. Sie können jedoch ebenfalls als Rippenrohre ausgebildet sein, um ihre Oberfläche zu vergrößern.

Zwischen den Unterhitze-Thermoöl-Heizrohren 74 sind Unterhitze-Luftaustrittsdüsen 80 angeordnet, die eine direkt zur Unterseite des Förderbandes 20 gerichtete Unterhitze-Zuluftströmung 12 erzeugen. Bevorzugt sind diese Unterhitze-Luftaustrittsdüsen 80 linienförmig ausgebildet und erstrecken sich quer über im Wesentlichen die gesamte Breite des Förderbands 20. Die Unterhitze-Abluft 76 wird durch Unterhitze-Lufteinlässe 70 zwischen den Unterhitze-Thermoöl-Heizrohren 74 mittels eines Gebläses (nicht dargestellt) mechanisch abgesaugt, was durch das "-"-Zeichen symbolisiert wird. Hierbei erwärmen die Unterhitze-Thermoöl-Heizrohre 74 die Unterhitze-Abluft 76. Unterhalb der Unterhitze-Thermoöl-Heizrohre 74 befinden sich Unterhitze-Abluftsammler 72, die in das Gebläse der Unterhitze münden. Von dem Gebläse wird die Unterhitze-Zuluft 12 über Unterhitze-Zuluftverteiler 84 an Unterhitze-Luftaustrittskanäle 82 geleitet, die in den Unterhitze-Luftaustrittsdüsen 80 münden.

Die Unterhitze-Luftaustrittsdüsen 80 sind entsprechend der ersten und zweiten Ausführungsform unterhalb des Förderbandes 20 angeordnet und zur Unterseite des Förderbandes 20 gerichtet, wobei sie eine direkt zur Unterseite des Förderbandes 20 gerichtete Unterhitze-Zuluftströmung 12 erzeugen. Durch die Unterhitze-Zuluftströmung 12 und die Absaugung der Unterhitze-Abluft 14 entsteht auch in dieser Ausführungsform eine Unterhitze-Vertikalturbulenz, die den Hauptteil des Wärmeeintrags auf das Backgut 2 bewirkt. Daneben strahlen die Unterhitze-Thermoöl-Heizrohre 74 nach oben ab und erwärmen die Unterseite des Backguts 2 durch Wärmestrahlung.

Dadurch, dass die Zufuhr und Absaugung der Konvektionsluft für die Oberhitze und die Unterhitze voneinander getrennt sind, ist eine individuelle Regelung der Konvektion der Unter- und Oberhitze möglich. So kann beispielsweise der Luftdurchsatz, die Luftgeschwindigkeit und die Lufttemperatur für Unter- und Oberhitze individuell voneinander eingestellt werden, um beispielsweise einen wesentlich höheren Konvektions-Wärmeeintrag durch die Unterhitze bereitzustellen als durch die Oberhitze. Damit kann das Backergebnis verbessert werden.

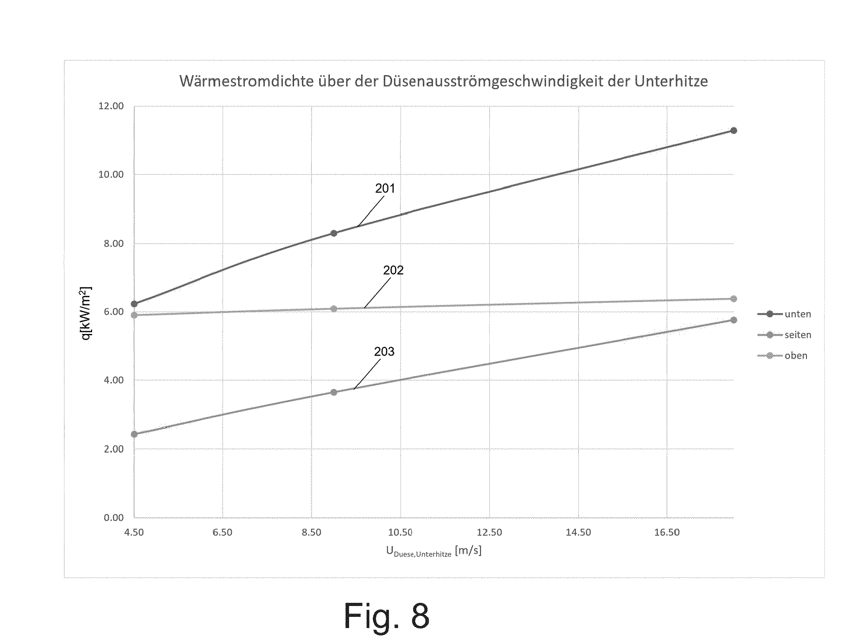

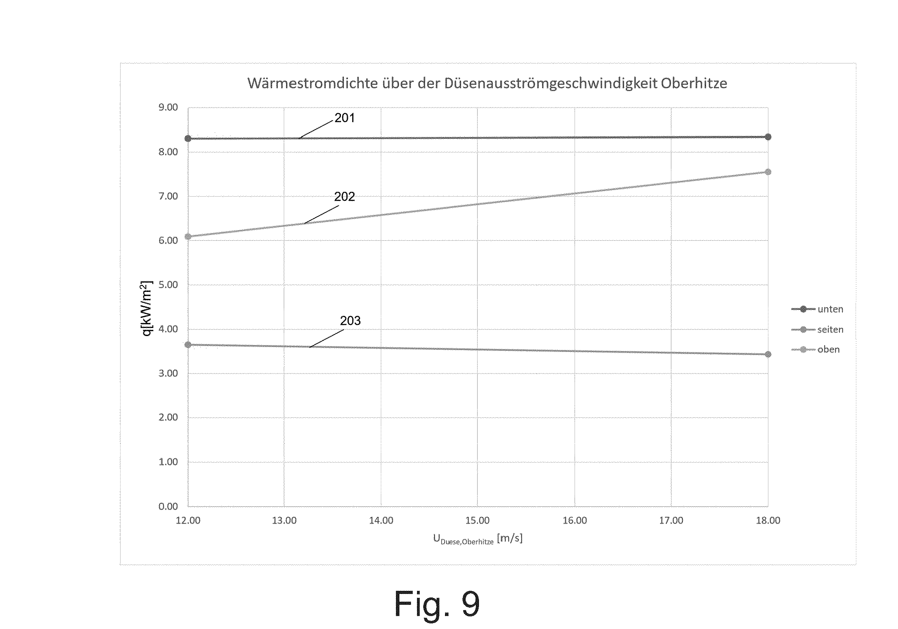

Die Figuren 8 und 9 zeigen Diagramme der Wärmestromdichten an einem Backgut, das in einer Kastenform gebacken wird, in Abhängigkeit der Düsenausströmgeschwindigkeiten der Unterhitze- und Oberhitze-Konvektion. Die Diagramme wurden im Rahmen von Strömungssimulationen eines beispielhaften Tunnelofens 1 gemäß Ausführungsform der Fig. 6 erstellt.

Der Graph 201 zeigt die Wärmestromdichte auf die Unterseite des Backguts 2, der Graph 202 die Wärmestromdichte auf die Oberseite des Backguts 2 und der Graph 203 die Wärmestromdichte auf die Seitenflächen des Backguts 2.

Im Diagramm der Fig. 8 wird die Düsenausströmgeschwindigkeit der Oberhitze-Konvektion konstant auf 12 m/s gehalten und die Düsenausströmgeschwindigkeit der Unterhitze-Konvektion von 4,5 m/s bis 18 m/s variiert. Man erkennt am Graph 201, dass die Wärmestromdichte auf die Unterseite des Backguts mit der Düsenausströmgeschwindigkeit der Unterhitze-Konvektion von etwa 6,2 kW/m² auf etwa 11,2 kW/m² ansteigt. An den Seitenflächen steigt die Wärmestromdichte von etwa 2,4 kW/m² auf 5,8 kW/m² an, wie an Graph 203 ersichtlich. Graph 202 zeigt hingegen, dass für die Oberseite des Backguts die Wärmestromdichte quasi konstant ist (minimaler Anstieg von 5,9 kW/m² auf 6,4 kW/m²).

Im Diagramm der Fig. 9 wird nun die Düsenausströmgeschwindigkeit der Unterhitze-Konvektion konstant auf 9 m/s gehalten und die Düsenausströmgeschwindigkeit der Oberhitze-Konvektion von 12 m/s bis 18 m/s variiert. Man erkennt am Graph 202, dass die Wärmestromdichte auf die Oberseite des Backguts mit der Düsenausströmgeschwindigkeit der Unterhitze-Konvektion von etwa 6,1 kW/m² auf etwa 7,6 kW/m² ansteigt. Graph 203 zeigt, dass die Wärmestromdichte an den Seitenflächen quasi konstant ist (minimaler Abfall von 3,7 kW/m² auf 3,4 kW/m²). An Graph 201 ist ersichtlich, dass die Wärmestromdichte konstant bei etwa 8,3 kW/m² verbleibt.

Die Strömungssimulationen der Diagramme der Figuren 8 und 9 zeigen, dass durch die besondere Luftführung mit einer Trennung von Unterhitze- und Oberhitze-Vertikalturbulenz, selbst bei sehr hohen Düsenausströmgeschwindigkeiten und damit verbundenen sehr hohen Wärmestromdichten am Backgut, eine unabhängige Regelung von Unterhitze-Konvektion und Oberhitze-Konvektion möglich ist.

### Bezugszeichenliste

- 1: Tunnelofen
- 2: Backwaren / Backgut
- 3: Backblech
- 10: Backraum
- 12: Unterhitze-Zuluftströmung
- 13: Unterhitze-Konvektionskreislauf
- 16: Unterhitze-Vertikalturbulenz
- 14: Unterhitze-Abluft
- 20: Förderband
- 26: Zwischenwand
- 30, 80: Unterhitze-Luftaustrittsdüsen
- 32, 82: Unterhitze-Luftaustrittskanäle
- 40,70: Unterhitze-Lufteinlässe
- 42, 72: Unterhitze-Luftabsaugkanäle
- 50: Oberhitze-Thermoöl-Heizrohre
- 52: Oberhitze-Luftabsaugkanäle
- 54: Oberhitze-Abluft
- 60: Oberhitze-Luftaustrittsdüsen
- 62: Oberhitze-Zuluftverteiler
- 64: Oberhitze-Zuluftströmung
- 66: Oberhitze-Lufteinlässe
- 74: Unterhitze-Thermoöl-Heizrohre
- 84: Unterhitze-Zuluftverteiler
- 100: Thermoöl-Luft-Wärmetauscher
- 110: Gebläse
- 201: Graph für Wärmestromdichte an Unterseite des Backguts
- 202: Graph für Wärmestromdichte an Oberseite des Backguts
- 203: Graph für Wärmestromdichte an Seitenflächen des Backguts

## Patentansprüche

1. Tunnelofen (1) für die industrielle Produktion von Backwaren; aufweisend
a. einen Backraum (10) mit einem luftdurchlässigen, endlos umlaufenden Förderband (20), welches zum Fördern von Backwaren (2) in einer Förderrichtung (F) durch den Backraum (10) eingerichtet ist;
b. eine Vielzahl von Unterhitze-Luftaustrittsdüsen (30), die unterhalb des Förderbandes (20) angeordnet und zur Unterseite des Förderbandes (20) gerichtet sind, wobei die Unterhitze-Luftaustrittsdüsen (30) eine direkt zur Unterseite des Förderbandes (20) gerichtete Unterhitze-Zuluftströmung (12) erzeugen;
c. eine Vielzahl von Unterhitze-Lufteinlässen (40), die flächig unterhalb des Förderbandes (20) verteilt sind, um Unterhitze-Abluft (14) unterhalb des Förderbandes (20) abzuführen; wobei
d. die Unterhitze-Abluft (14) mittels eines Gebläses (110) abgesaugt und durch Thermoöl beheizt als die Unterhitze-Zuluftströmung (12) zugeführt wird, so dass ein Unterhitze-Konvektionskreislauf (13) erzeugt wird, und
e. der Tunnelofen (1) weiterhin mindestens einen außerhalb des Backraums (10) angeordneten Thermoöl-Luft-Wärmetauscher (100) aufweist, der eingerichtet ist, die über die Unterhitze-Lufteinlässe (40) abgesaugte Unterhitze-Abluft (14) aufzuheizen und den Unterhitze-Luftaustrittsdüsen (30) als Unterhitze-Zuluft (12) zuzuführen.

2. Tunnelofen gemäß Anspruch 1, wobei die Unterhitze-Luftaustrittsdüsen (30) zumindest abschnittsweise linienförmig ausgebildet sind und/oder sich im Wesentlichen über die gesamte Breite des Förderbandes (20) erstrecken.

3. Tunnelofen gemäß einem der Ansprüche 1 oder 2, wobei die Unterhitze-Luftaustrittsdüsen (30) und die Unterhitze-Lufteinlässe (40) im Wesentlichen auf der selben Ebene unterhalb des Förderbandes (20) angeordnet sind.

4. Tunnelofen gemäß einem der Ansprüche 1 bis 3, weiterhin aufweisend
- eine Vielzahl von kanalartig ausgebildeten Unterhitze-Luftaustrittskanälen (32), die unterhalb des Förderbandes (20) und quer zur Förderrichtung (F) angeordnet sind, zur Zufuhr von Zuluft (12) zu den Unterhitze-Luftaustrittsdüsen (30); und/oder
- eine Vielzahl von kanalartig ausgebildeten Unterhitze-Luftabsaugkanälen (42), die unterhalb des Förderbandes (20) und quer zur Förderrichtung (F) angeordnet sind, zur Abfuhr von Abluft (14) von den Unterhitze-Lufteinlässen (40).

5. Tunnelofen gemäß Anspruch 4, wobei die Unterhitze-Luftaustrittskanäle (32) und die Unterhitze-Luftabsaugkanäle (42) in Förderrichtung (F) alternierend angeordnet sind.

6. Tunnelofen gemäß einem der Ansprüche 4 oder 5, wobei
- die Unterhitze-Luftaustrittskanäle (32) einen trapezförmigen Querschnitt aufweisen, der sich von unten nach oben verengt; und/oder
- die Unterhitze-Luftabsaugkanäle (42) einen trapezförmigen Querschnitt aufweisen, der sich von unten nach oben weitet; und/oder
- zwei benachbarte Unterhitze-Luftaustritts- und Unterhitze-Luftabsaugkanäle (32, 42) jeweils eine gemeinsame, geneigt angeordnete Zwischenwand (26) aufweisen.

7. Tunnelofen gemäß einem der Ansprüche 1 bis 6, wobei der Backraum (10) unterhalb der Backwaren (2) im Wesentlichen mittels Konvektion beheizt wird.

8. Tunnelofen gemäß einem der Ansprüche 1 bis 7, weiterhin aufweisend:
- eine Vielzahl von Oberhitze-Luftaustrittsdüsen (60), die oberhalb des Förderbandes (20) im oberen Bereich des Backraums (10) angeordnet sind, und zur Oberseite des Förderbandes (20) gerichtet sind, wobei die Oberhitze-Luftaustrittsdüsen (60) eine direkt zur Oberseite des Förderbandes (20) gerichtete Oberhitze-Zuluftströmung (64) erzeugen; und
- eine Vielzahl von Oberhitze-Lufteinlässe (66), die flächig oberhalb des Förderbandes (20) verteilt sind, um Oberhitze-Abluft (54) flächig oberhalb des Förderbandes (20) abzuführen; wobei
- die Oberhitze-Abluft (54) mechanisch abgesaugt und als die Oberhitze-Zuluftströmung (64) zugeführt wird, so dass ein Oberhitze-Konvektionskreislauf erzeugt wird.

9. Tunnelofen gemäß einem der Ansprüche 1 bis 8, weiterhin aufweisend eine Vielzahl von Oberhitze-Thermoöl-Heizrohren (50), die im oberen Bereich des Backraums (10) angeordnet sind.

10. Tunnelofen gemäß den Ansprüchen 8 und 9, wobei die Oberhitze-Thermoöl-Heizrohre (50) von unten nach oben mit Oberhitze-Abluft (54) durchströmt werden.

11. Tunnelofen gemäß einem der Ansprüche 8-10, wobei die Oberhitze-Luftaustrittsdüsen (60) zumindest abschnittsweise linienförmig ausgebildet sind und/oder sich im Wesentlichen über die gesamte Breite des Förderbandes (20) erstrecken.

12. Tunnelofen gemäß einem der Ansprüche 1 bis 11, weiterhin aufweisend einen Thermoölheizkessel, eingerichtet zur Beheizung von Thermoöl für den mindestens einen Thermoöl-Luft-Wärmetauscher (100) und/oder eingerichtet zur Beheizung der Vielzahl von Oberhitze- Thermoöl-Heizrohren (50).

13. Tunnelofen gemäß einem der Ansprüche 1 bis 12, wobei
- die Breite des Förderbandes (20) mindestens 2 m und/oder maximal 4 m beträgt, bevorzugt 3 bis 4 m, und insbesondere 2 m, 2,5 m, 3 m, 3,5 m, 4 m beträgt und/oder
- die Länge des Tunnelofens (1) mindestens 10 m und/oder maximal 50 m beträgt, bevorzugt 10 bis 30 m besonders bevorzugt 10 bis 20 m.

## Claims

1. Tunnel oven (1) for the industrial production of baked goods; comprising
a. a baking chamber (10) with an air-permeable, endlessly circulating conveyor belt (20), which is configured to convey baked goods (2) in a conveying direction (F) through the baking chamber (10);
b. a plurality of bottom-heat air outlet nozzles (30), which are arranged below the conveyor belt (20) and are directed towards the underside of the conveyor belt (20), wherein the bottom-heat air outlet nozzles (30) generate a bottom-heat inlet air flow (12) directed directly towards the underside of the conveyor belt (20);
c. a plurality of bottom-heat air inlets (40), which are distributed in a planar manner below the conveyor belt (20), to discharge bottom-heat exhaust air (14) below the conveyor belt (20); wherein
d. the bottom-heat exhaust air (14) is sucked off by means of a fan (110) and is supplied heated by thermo oil as the bottom-heat inlet air flow (12), so that a bottom-heat convection circuit (13) is generated, and
e. the tunnel oven (1) further comprises at least one thermo oil-air heat exchanger (100) arranged outside the baking chamber (10), which is configured to heat the bottom-heat exhaust air (14) sucked off via the bottom-heat air inlets (40) and to supply it to the bottom-heat air outlet nozzles (30) as bottom-heat inlet air (12).

2. Tunnel oven according to claim 1, wherein the bottom-heat air outlet nozzles (30) are formed to be linear at least in sections and/or extend substantially over the entire width of the conveyor belt (20).

3. Tunnel oven according to one of claims 1 or 2, wherein the bottom-heat air outlet nozzles (30) and the bottom-heat air inlets (40) are arranged substantially on the same plane below the conveyor belt (20).

4. Tunnel oven according to one of claims 1 to 3, further comprising
- a plurality of bottom-heat air outlet channels (32) formed in a channel-like manner, which are arranged below the conveyor belt (20) and transversely to the conveying direction (F), for supplying inlet air (12) to the bottom-heat air outlet nozzles (30); and/or
- a plurality of bottom-heat air suction channels (42) formed in a channel-like manner, which are arranged below the conveyor belt (20) and transversely to the conveying direction (F), for discharging exhaust air (14) from the bottom-heat air inlets (40).

5. Tunnel oven according to claim 4, wherein the bottom-heat air outlet channels (32) and the bottom-heat air suction channels (42) are arranged in an alternating manner in the conveying direction (F).

6. Tunnel oven according to one of claims 4 or 5, wherein
- the bottom-heat air outlet channels (32) have a trapezoidal cross section, which narrows from bottom to top; and/or
- the bottom-heat air suction channels (42) have a trapezoidal cross section, which widens from bottom to top; and/or
- two adjacent bottom-heat air outlet and bottom-heat air suction channels (32, 42) each have a common intermediate wall (26) arranged in an inclined manner.

7. Tunnel oven according to one of claims 1 to 6, wherein the baking chamber (10) below the baked goods (2) is heated substantially by means of convection.

8. Tunnel oven according to one of claims 1 to 7, further comprising:
- a plurality of top-heat air outlet nozzles (60), which are arranged above the conveyor belt (20) in the upper region of the baking chamber (10), and are directed towards the upper side of the conveyor belt (20), wherein the top-heat air outlet nozzles (60) generate a top-heat inlet air flow (64) directed directly towards the upper side of the conveyor belt (20); and
- a plurality of top-heat air inlets (66), which are distributed in a planar manner above the conveyor belt (20), to discharge top-heat exhaust air (54) in a planar manner above the conveyor belt (20); wherein
- the top-heat exhaust air (54) is mechanically sucked off and supplied as the top-heat inlet air flow (64), so that a top-heat convection circuit is generated.

9. Tunnel oven according to one of claims 1 to 8, further comprising a plurality of top-heat thermo-oil heating tubes (50), which are arranged in the upper region of the baking chamber (10).

10. Tunnel oven according to claims 8 and 9, wherein top-heat exhaust air (54) flows through the top-heat thermo-oil heating tubes (50) from bottom to top.

11. Tunnel oven according to one of claims 8-10, wherein the top-heat air outlet nozzles (60) are formed to be linear at least in sections and/or extend substantially over the entire width of the conveyor belt (20).

12. Tunnel oven according to one of claims 1 to 11, further comprising a thermo-oil heating boiler, configured to heat thermo oil for the at least one thermo-oil-air heat exchanger (100) and/or configured to heat the plurality of top-heat thermo-oil heating tubes (50).

13. Tunnel oven according to one of claims 1 to 12, wherein
- the width of the conveyor belt (20) is at least 2 m and/or at most 4 m, preferably 3 to 4 m, and in particular 2 m, 2.5 m, 3 m, 3.5 m, 4 m and/or
- the length of the tunnel oven (1) is at least 10 m and/or at most 50 m, preferably 10 to 30 m, particularly preferably 10 to 20 m.

## Revendications

1. Four tunnel (1) pour la production industrielle de produits de boulangerie ; comportant
a. une chambre de cuisson (10) avec une bande transporteuse (20) perméable à l'air tournant sans fin, qui est configurée pour transporter des produits de boulangerie (2) dans une direction de transport (F) à travers la chambre de cuisson (10) ;
b. une pluralité de buses de sortie d'air de chauffe par le bas (30), qui sont disposées en dessous de la bande transporteuse (20) et sont dirigées vers le côté inférieur de la bande transporteuse (20), dans lequel les buses de sortie d'air de chauffe par le bas (30) génèrent un flux d'air entrant de chauffe par le bas (12) dirigé directement vers le côté inférieur de la bande transporteuse (20) ;
c. une pluralité d'entrées d'air de chauffe par le bas (40), qui sont réparties à plat sous la bande transporteuse (20) pour évacuer l'air sortant de chauffe par le bas (14) sous la bande transporteuse (20) ; dans lequel
d. l'air sortant de chauffe par le bas (14) est évacué par aspiration au moyen d'une soufflante (110) et est chauffé par de l'huile thermique lorsque le flux d'air entrant de chauffe par le bas (12) est amené, de telle sorte qu'un circuit de convection de chauffe par le bas (13) est généré, et
e. le four tunnel (1) comporte en outre au moins un échangeur de chaleur huile thermique-air (100) disposé à l'extérieur de la chambre de cuisson (10), qui est conçu pour chauffer l'air sortant de chauffe par le bas (14) évacué par aspiration par l'intermédiaire des entrées d'air de chauffe par le bas (40) et l'amener aux buses de sortie d'air de chauffe par le bas (30) en tant qu'air entrant de chauffe par le bas (12).

2. Four tunnel selon la revendication 1, dans lequel les buses de sortie d'air de chauffe par le bas (30) sont réalisées au moins par endroits en forme de lignes et/ou s'étendent dans l'ensemble sur toute la largeur de la bande transporteuse (20).

3. Four tunnel selon l'une des revendications 1 ou 2, dans lequel les buses de sortie d'air de chauffe par le bas (30) et les entrées d'air de chauffe par le bas (40) sont disposées dans l'ensemble sur le même niveau en dessous de la bande transporteuse (20).

4. Four tunnel selon l'une des revendications 1 à 3, comportant en outre
- une pluralité de canaux de sortie d'air de chauffe par le bas (32) réalisés à la manière de canaux, qui sont disposés en dessous de la bande transporteuse (20) et de manière transversale à la direction de transport (F), pour l'amenée d'air entrant (12) aux buses de sortie d'air de chauffe par le bas (30) ; et/ou
- une pluralité de canaux d'évacuation par aspiration d'air de chauffe par le bas (42) réalisés à la manière de canaux, qui sont disposés en dessous de la bande transporteuse (20) et de manière transversale à la direction de transport (F), pour évacuer l'air sortant (14) des entrées d'air de chauffe par le bas (40).

5. Four tunnel selon la revendication 4, dans lequel les canaux de sortie d'air de chauffe par le bas (32) et les canaux d'évacuation par aspiration d'air de chauffe par le bas (42) sont disposés en alternance dans la direction de transport (F).

6. Four tunnel selon l'une des revendications 4 ou 5, dans lequel
- les conduits de sortie d'air de chauffe par le bas (32) comportent une section transversale trapézoïdale qui se rétrécit du bas vers le haut ; et/ou
- les canaux d'évacuation par aspiration d'air de chauffe par le bas (42) comportent une section transversale trapézoïdale qui s'élargit du bas vers le haut ; et/ou
- deux canaux de sortie d'air de chauffe par le bas et d'évacuation par aspiration d'air de chauffe par le bas (32, 42) adjacents comportent chacun une paroi intermédiaire (26) commune disposée de manière inclinée.

7. Four tunnel selon l'une des revendications 1 à 6, dans lequel la chambre de cuisson (10) sous les produits de boulangerie (2) est chauffée dans l'ensemble par convection.

8. Four tunnel selon l'une des revendications 1 à 7, comportant en outre
- une pluralité de buses de sortie d'air de chauffe par le haut (60), qui sont disposées au-dessus de la bande transporteuse (20) dans la zone supérieure de la chambre de cuisson (10) et sont dirigées vers le côté supérieur de la bande transporteuse (20), dans lequel les buses de sortie d'air de chauffe par le haut (60) génèrent un flux d'air entrant de chauffe par le haut (64) dirigé directement vers le côté supérieur de la bande transporteuse (20) ; et
- une pluralité d'entrées d'air de chauffe par le haut (66), qui sont réparties à plat au-dessus de la bande transporteuse (20) pour évacuer l'air sortant de chauffe par le haut (54) à plat au-dessus de la bande transporteuse (20) ; dans lequel
- l'air sortant de chauffe par le haut (54) est évacué par aspiration mécaniquement et est amené en tant que flux d'air entrant de chauffe par le haut (64), de telle sorte qu'un circuit de convection de chauffe par le haut est généré.

9. Four tunnel selon l'une des revendications 1 à 8, comportant en outre une pluralité de tubes chauffants à huile thermique de chauffe par le haut (50), qui sont disposés dans la zone supérieure de la chambre de cuisson (10).

10. Four tunnel selon les revendications 8 et 9, dans lequel les tubes chauffants à huile thermique de chauffe par le haut (50) sont traversés du bas vers le haut par de l'air sortant de chauffe par le haut (54).

11. Four tunnel selon l'une des revendications 8 à 10, dans lequel les buses de sortie d'air de chauffe par le haut (60) sont réalisées au moins par endroits en forme de lignes et/ou s'étendent dans l'ensemble sur toute la largeur de la bande transporteuse (20).

12. Four tunnel selon l'une des revendications 1 à 11, comportant en outre une chaudière à huile thermique, mise au point pour chauffer de l'huile thermique pour l'au moins un échangeur de chaleur huile thermique-air (100) et/ou mise au point pour chauffer la pluralité de tubes chauffants à huile thermique de chauffe par le haut (50).

13. Four tunnel selon l'une des revendications 1 à 12, dans lequel
- la largeur de la bande transporteuse (20) est d'au moins 2 m et/ou de 4 m au maximum, de manière préférée de 3 à 4 m, et en particulier de 2 m, 2,5 m, 3 m, 3,5 m, 4 m et/ou
- la longueur du four tunnel (1) est d'au moins 10 m et/ou de 50 m au maximum, de manière préférée de 10 à 30 m, de manière particulièrement préférée de 10 à 20 m.
